# EUROPÄISCHE PATENTSCHRIFT

(11) **EP 3 433 981 B1**
(45) Veröffentlichungstag und Bekanntmachung des Hinweises auf die Patenterteilung: **02.10.2019**
(21) Anmeldenummer: 17706682.6
(22) Anmeldetag: 26.01.2017
(51) Int. Cl.: H04L 12/403, H05B 33/08

(54) **EFFIZIENTE STEUERUNGSANORDNUNG UND STEUERUNGSVERFAHREN**
EFFICIENT CONTROL ASSEMBLY AND CONTROL METHOD
ENSEMBLE DE COMMANDE EFFICACE ET PROCÉDÉ DE COMMANDE

(30) Priorität: 21.03.2016 DE 102016105264
(43) Veröffentlichungstag der Anmeldung: 30.01.2019
(73) Patentinhaber: INOVA Semiconductors GmbH, 81671 München (DE)
(72) Erfinder: NEUMANN, Roland, 81671 München (DE)
(74) Vertreter: Reich, Jochen
(86) Internationale Anmeldenummer: PCT/EP2017/000091
(87) Internationale Veröffentlichungsnummer: WO 2017/162323

(56) Entgegenhaltungen:
- US-A1- 2005 201 305
- US-A1- 2014 333 207

## Beschreibung

Die vorliegende Erfindung ist gerichtet auf eine Steuerungsanordnung mit in Serie geschalteten Steuereinheiten mitsamt einem entsprechenden Steuerungsverfahren, welche es ermöglicht, eine besonders effiziente Datenübertragung, insbesondere für Leuchtdiodensteuereinheiten, bereitzustellen. Die vorliegende Erfindung ist ebenso gerichtet auf ein entsprechendes Protokoll, welches Steuereinheiten veranlasst, die entsprechenden Verfahrensschritte auszuführen. Hierzu veranlasst das Steuerungsprotokoll ein Übermitteln von Steuersignalen zwischen den Steuereinheiten. Ferner wird ein Computerprogrammprodukt vorgeschlagen, welches Steuerbefehle zur Ausführung des Verfahrens beziehungsweise des Protokolls aufweist und die Steuerbefehle einem Rechner zu deren Ausführung vorhält.

US 2014/0 333 207 A1 zeigt eine Leuchtanordnung mit Leuchtdioden, welche gemäß des bekannten Daisy-Chaining-Verfahrens in Serie geschaltet sind und hierbei Statusinformation austauschen.

US 8 492 983 B1 zeigt ein System zum Kontrollieren von Leuchtdioden mittels einer seriellen Busleitung. Hierbei werden ein Empfangen eines Adressfelds sowie das Abändern eines Adressfelds vorgeschlagen.

US 2009/ 0 021 955 A1 zeigt ein Fahrzeug mit einer Beleuchtungsanordnung mit Leuchtdioden mitsamt entsprechender Ansteuerung.

US 2005/ 0201305 A1 zeigt eine Vorrichtung und ein Verfahren zur Übertragung von Daten.

Gemäß bekannten Verfahren werden Lauflängencodierungen und Kommunikationsprotokolle zum Datenaustausch zwischen Recheneinheiten vorgeschlagen. So sind beispielsweise Internetprotokolle bekannt, welche mittels mehreren Servereinheiten ein Computernetz bereitstellen. Hierzu sind entsprechende Komponenten bereitzustellen, welche über extensive Rechenkapazitäten und Speicher verfügen. Solche Kommunikationsnetze werden typischerweise derart betrieben, dass eine Kommunikation auf einer Datenleitung in eine Richtung eine Antwort in entgegengesetzter Richtung veranlasst.

So sind bestimmte Handshake-Protokolle bekannt, welche beispielsweise einen Verbindungsaufbau aushandeln und hierbei eine Reihe von Anfragen und Antworten mit sich führen. Somit erfolgt gemäß dem Stand der Technik typischerweise keine unidirektionale Kommunikation, sondern es werden auch bei einem Datenaustausch von einer ersten Einheit an eine zweite Einheit Daten von der zweiten Einheit an die erste Einheit übertragen. Somit wird in herkömmlichen Verfahren stets ein Rückkanal reserviert, der auch auf dem Hinkanal eine Bandbreitenreduktion bewirken kann.

Hierzu ist es auch notwendig, die kommunizierenden Einheiten derart einzurichten, dass diese unterschiedliche Datensignale sowohl in einer Hin- als auch einer Rückrichtung verarbeiten müssen.

Gemäß herkömmlicher Verfahren ist eine Vielzahl von Möglichkeiten bekannt, Steuereinheiten, welche seriell geschaltet sind, anzusprechen. Hierbei gibt es generische Ansätze, welche jedoch in spezifischen Anwendungsszenarien nachteilig sein können oder aber auch sehr spezielle Ansätze, welche nunmehr nicht mehr in generischer Weise einsetzbar sind. Bekannt ist beispielsweise der sogenannte CAN-Bus, welcher bezüglich Kabelbäume entwickelt wurde und insbesondere eine Vernetzung von Steuergeräten umsetzen soll. Der CAN-Bus sieht eine große Anzahl von Komponenten vor und benötigt eine Vielzahl von Sicherungsmechanismen, welche sicherstellen, dass keine Übertragungsfehler stattfinden. Ferner ist eine Vielzahl von Datenübertragungen notwendig, um die Integrität der Daten sicherzustellen. Hierzu wird eine Reihe von Vorkehrungen getroffen, welche wiederum Rechenressourcen und Bandbreite beanspruchen.

Ferner bekannt ist der sogenannte LIN-Bus, Local Interconnet Network Bus, welcher ebenfalls für serielle Kommunikationssysteme und insbesondere zur Vernetzung von Sensoren und Steuereinheiten entwickelt wurde. Bei dem LIN-Bus handelt es sich um einen generischen Ansatz, welcher für breitbandige Anwendungsszenarien typischerweise nicht Anwendung findet. Ferner muss gemäß dem LIN-Bus ebenfalls eine umfangreiche Fehlerbehandlung durchgeführt werden. So werden beispielsweise Prüfsummen berechnet und fehlerhaft erkannte Signale werden verworfen. Eine Fehlersignalisierung ist hierbei nicht Teil des Protokolls, sondern muss gegebenenfalls in einer weiteren Anwendungsschicht definiert werden.

Ferner ist eine Reihe von Kommunikationsprotokollen bekannt, welche eine Datenübermittlung in einem Kommunikationsnetzwerk veranlassen. Hierbei wird typischerweise eine zentrale Einheit gebildet, welche den Datenverkehr regelt. Dieser Stand der Technik sieht jedoch nicht vor, dass eine Mehrzahl von weiteren Steuereinheiten derart in Serie geschaltet ist, dass diese in Serie geschalteten Steuereinheiten eben keine Kommunikationsverwaltung übernehmen, sondern lediglich empfangene Befehle umsetzen. Vorteil von in Serie geschalteten Steuereinheiten ist es, dass diese eben keine Koordinierung der Netzwerkkommunikation steuern müssen, sondern, dass diese jeweils die gleichen Steuerbefehle von einer Steuereinheit empfangen können, diese selbst lediglich umsetzen müssen und weiterreichen können.

Somit sind Verfahren und Vorrichtungen bekannt, welche typischerweise eine performante Hardware benötigen und dennoch lediglich mit einer reduzierten Bandbreite operieren können. Da ankommende und abgehende Datenpakete unterschiedlich aufgebaut werden müssen, ist auch eine entsprechend aufwändige Hardware bereitzustellen. Insbesondere ist es gemäß dem Stand der Technik nachteilig, dass bei einer Kommunikation stets ein Rückkanal vorgehalten werden muss, der eine Antwort an die sendende Einheit rückübermittelt. Auch werden gemäß bekannter Recheneinheiten typischerweise mehrere angeschlossene Einheiten parallel bedient, so dass es in einer Recheneinheit notwendig ist, nicht nur Hin- und Rückrichtungen zu koordinieren, sondern vielmehr auch eine Menge von Kommunikationspartner zu bedienen. Typischerweise unterscheiden sich hierbei abgehende und ankommende Datenpakete derart, dass herkömmliche Einheiten unterschiedliche Datenformate beziehungsweise Rahmen behandeln können müssen.

Somit ist es eine Aufgabe der vorliegenden Erfindung, eine Anordnung von Steuereinheiten beziehungsweise ein entsprechendes Steuerverfahren bereitzustellen, welche es ermöglicht, besonders schlanke, d.h. technisch wenig aufwändige, Komponenten zu betreiben und dennoch eine sichere Datenübertragung bei maximaler Bandbreite zu ermöglichen. Es ist ferner eine Aufgabe der vorliegenden Erfindung, ein entsprechendes Computerprogrammprodukt mit Steuerbefehlen, welche das erfindungsgemäße Verfahren veranlassen, bereitzustellen.

Diese Aufgabe wird gelöst gemäß den Merkmalen des Patentanspruchs 1. Weitere vorteilhafte Ausgestaltungen sind in den Unteransprüchen angegeben.

Demgemäß wird eine Steuerungsanordnung mit in Serie geschalteten Steuereinheiten, jede der Steuereinheiten aufweisend eine erste Kommunikationsschnittstelle, welche eingerichtet ist zur Kommunikation mit einer weiteren Steuereinheit und einer zweiten Kommunikationsschnittstelle, welche geeignet ist zur Kommunikation mit einer weiteren Steuereinheit vorgeschlagen. Erfindungsgemäß sind die Steuereinheiten derart eingerichtet, dass Steuersignale von der ersten Kommunikationsschnittstelle an die zweite Kommunikationsschnittstelle exklusiv oder von der zweiten Kommunikationsschnittstelle an die erste Kommunikationsschnittstelle übermittelt werden.

Erfindungsgemäß ist es hierbei besonders vorteilhaft, dass zu keinem Zeitpunkt während einer Übertragung von Steuersignalen gleichzeitig bidirektional übermittelt wird. Definiert man zwischen der ersten Kommunikationsschnittstelle und der zweiten Kommunikationsschnittstelle eine Übermittlungsrichtung, so wird bei einer Datenübertragung stets in die gleiche Übermittlungsrichtung gesendet. Es kommt also zu keinem Zeitpunkt vor, dass sowohl eine Kommunikationsrichtung von der ersten Kommunikationsschnittstelle an die zweite Kommunikationsschnittstelle sowie eine Kommunikationsrichtung von der zweiten Kommunikationsschnittstelle an die erste Kommunikationsschnittstelle benötigt wird. Folglich ist die erfindungsgemäße Steuerungsanordnung nicht lediglich derart eingerichtet, dass stets immer in die gleiche Kommunikationsrichtung gesendet wird, sondern vielmehr ist es ein Vorteil der vorliegenden Erfindung, dass eben in beide Kommunikationsrichtungen gesendet werden kann, dies jedoch zeitversetzt erfolgt.

Somit ist die erfindungsgemäße Steuereinheit, welche in der Steuerungsanordnung Verwendung findet, derart eingerichtet, dass sie von der ersten Kommunikationsschnittstelle zur zweiten Kommunikationsschnittstelle sendet, gleichzeitig aber auch eingerichtet ist, in umgekehrter Kommunikationsrichtung zu senden. Hierbei beschreibt der Ausdruck "exklusiv oder" keine Alternative der strukturellen Ausgestaltung der zugrunde liegenden Steuereinheiten. Vielmehr wird darauf abgestellt, dass die Steuereinheiten tatsächlich in beide Richtungen kommunizieren können, dies jedoch niemals gleichzeitig tun.

Mit dem Begriff "Steuersignale" wird beschrieben, dass es sich nicht um ein atomares Steuersignal handelt, sondern dass eine Mehrzahl von Steuersignalen stets in eine Richtung ausgetauscht wird. Dies ist insbesondere deshalb vorteilhaft, da die Mehrzahl der Steuersignale ausschließlich in eine Kommunikationsrichtung übermittelt wird. Dies schließt aus, dass eine atomare Anfrage in eine erste Kommunikationsrichtung gesendet wird und hierbei eine Antwort in entgegengesetzter Richtung gesendet wird. Vielmehr ist es erfindungsgemäß derart vorgesehen, dass erste Steuersignale in einer erste Kommunikationsrichtung, nämlich von der ersten Kommunikationsschnittstelle an die zweite Kommunikationsschnittstelle gesendet werden, und anschließend, also zeitversetzt, eine zweite Mehrzahl von Steuersignalen von der zweiten Kommunikationsschnittstelle an die erste Kommunikationsschnittstelle, also in einer zweiten Kommunikationsrichtung, gesendet wird. Somit ist es ein erfindungsgemäßes Merkmal, dass die Steuereinheiten derart eingerichtet sind, dass sie bei einem Übersenden zusammenhängender Steuersignale nicht gleichzeitig ein weiteres Übersenden weiterer Steuersignale in Gegenrichtung veranlassen. Der Fachmann erkennt hierbei, dass es sich bei einem atomaren Steuersignal beziehungsweise bei einer atomaren Anfrage um ein einzelnes Steuersignal beziehungsweise um eine einzelne Anfrage handelt.

Dies ist insbesondere deshalb vorteilhaft, da hierdurch eine exklusive Abarbeitung einer Kommunikationsrichtung möglich wird. Es ist also nicht vorgesehen, dass wie bei bekannten Servern eine Recheneinheit stets mehrere Kommunikationsrichtungen bedient und hierbei Anfragen und Antworten abarbeitet beziehungsweise übersendet, sondern es erfolgt ein verbindungsloses Übermitteln von Steuersignalen. Somit impliziert die vorliegende Steuerungsanordnung, dass bei einem Abarbeiten einer Kommunikation in einer Kommunikationsrichtung die jeweils andere Kommunikationsrichtung gesperrt ist. Somit wird mit wenig technischem Aufwand eine Mehrzahl von Steuereinheiten bereitgestellt, welche erfindungsgemäß keine Rechenkapazität für mehrere Kommunikationsrichtungen bereitstellen müssen als auch die entsprechenden Datenleitungen exklusiv ausnutzen können. Somit muss erfindungsgemäß auch nicht zwischen einer Brutto-Bandbreite und einer Netto-Bandbreite unterschieden werden, da stets die volle Brutto-Bandbreite zur Verfügung steht. Es kommt also nicht zu einem sogenannten Overhead und zu keinem Rückübermitteln von Steuersignalen, so dass stets die maximal technisch mögliche Bandbreite eines Kommunikationskanals zur Verfügung steht.

Erfindungsgemäß wird eine Steuerungsanordnung vorgeschlagen. Die Steuereinheiten sind derart in Serie geschaltet, dass eine Steuereinheit einen oder maximal zwei Kommunikationspartner, nämlich weitere Steuereinheiten, aufweist. Bei einer Mehrzahl in Serie geschalteter Steuereinheiten hat jede Steuereinheit typischerweise zwei Kommunikationspartner, wobei es auch möglich ist, dass lediglich ein Kommunikationspartner, am Ende der Serie, vorliegt. Auch kann die Serie von Steuereinheiten mit weiteren Befehlseinheiten gekoppelt sein. Typischerweise liegen die in Serie geschalteten Steuereinheiten jeweils in direkter Verbindung vor. Das heißt, dass typischerweise keine Zwischeneinheiten in die Serie mit eingeschaltet werden. Lediglich am Anfang einer Serie ist es möglich, eine Befehlseinheit vorzusehen. Diese Befehlseinheit kann auch als Master bezeichnet werden, während die weiteren in Serie geschalteten Steuereinheiten jeweils als Slave bezeichnet werden.

Dementsprechend sind auch die Kommunikationsschnittstellen eingerichtet. Da jede Steuereinheit typischerweise zwei Kommunikationsnachbarn aufweist, ist eben eine erste Kommunikationsschnittstelle mit einem ersten Nachbarn vorgesehen und eine zweite Kommunikationsschnittstelle mit einem zweiten Nachbarn. Hierbei wird die erste Kommunikationsschnittstelle stets verwendet und ist daher eingerichtet zur Kommunikation mit einer weiteren Steuereinheit. Während die zweite Kommunikationsschnittstelle ebenfalls eingerichtet sein kann zur Kommunikation mit einer weiteren Steuereinheit, so ist diese zumindest geeignet zur Kommunikation mit einer weiteren Steuereinheit. Dies beschreibt den Fall, in dem die Kommunikationsschnittstelle bildlich gesprochen ins Leere verläuft, da keine weitere Steuereinheit angeschlossen ist. Somit sind typischerweise beide Kommunikationsschnittstellen eingerichtet, mit weiteren Steuereinheiten zu kommunizieren, da die Steuereinheiten typischerweise zwei Kommunikationsnachbarn haben. Hierbei soll jedoch nicht der Fall ausgeschlossen werden, dass die Steuereinheit am Ende der Serie verbaut ist, und somit ist die zweite Kommunikationsschnittstelle am Ende der Serie lediglich geeignet zur Kommunikation mit einer weiteren Steuereinheit. Dies ist insbesondere deshalb vorteilhaft, da alle Steuereinheiten typischerweise gleich ausgestaltet werden. Somit muss nicht unterschieden werden zwischen Steuereinheiten, welche innerhalb der Serie verbaut sind und Steuereinheiten, die am Ende der Serie verbaut sind.

Bei einem Übermitteln von Steuersignalen von der ersten Kommunikationsschnittstelle an die zweite Kommunikationsschnittstelle handelt es sich typischerweise um ein Durchreichen von Steuerbefehlen durch die Steuereinheit hindurch. Somit werden Steuersignale von einer Kommunikationsschnittstelle empfangen, diese entweder bearbeitet oder direkt an die zweite Kommunikationsschnittstelle durchgereicht. Auch ist der Fall möglich, dass Steuersignale empfangen und bearbeitet werden und unmittelbar nach dem Empfangen weitergereicht werden. Somit muss nicht auf das Ergebnis der Abarbeitung der Steuerbefehle gewartet werden, sondern die Steuerbefehle beziehungsweise Steuersignale können innerhalb der Steuereinheit verarbeitet werden, während diese bereits an eine weitere Steuereinheit weitergereicht wurden. Somit ist ebenfalls ein effizientes Weiterreichen der Steuersignale möglich, da nicht eine Zeitverzögerung der Abarbeitung der Steuersignale in Kauf genommen werden muss.

Die Verwendung der Kommunikationsschnittstellen impliziert auf der Steuerungsanordnung insgesamt eine Kommunikationsrichtung. So beziehen sich die Merkmale Kommunikationsrichtung innerhalb der Steuereinheiten auch auf Datenleitungssegmente, welche die Steuereinheiten verbinden. So werden eben auch die Datenleitungssegmente, welche die Steuereinheiten verbinden, exklusiv genutzt, da es möglich ist, die Kommunikationsrichtung auf mehreren Steuereinheiten zu implementieren. So kann die zugrunde liegende Übermittlung der Steuersignale in einer ersten Steuereinheit bewirken, dass Steuersignale empfangen werden, eine Kommunikationsrichtung eingestellt wird und die Steuerbefehle weitergeleitet werden. Ein Einstellen einer Kommunikationsrichtung impliziert hierbei, dass bei einem Eingang von Daten von einem ersten Kommunikationspartner der entsprechende Ausgang zu diesem Kommunikationspartner gesperrt wird, es sei denn, es handelt sich um die letzte Steuereinheit in der Serie. Vielmehr wird nach dem Weiterreichen der empfangenen Steuersignale in einer weiteren Steuereinheit ein Empfangen eben dieser Steuersignale ausgelöst. Somit bewirkt ein Übermitteln von Steuersignalen von einer ersten Steuereinheit an eine zweite Steuereinheit ein Sperren der zugrunde liegenden Rückrichtung.

Lediglich bei der letzten in Serie geschalteten Steuereinheit wird nach einem Empfangen der Steuersignale die Rückrichtung freigeschaltet und ein Abarbeitungsergebnis der Steuersignale wieder zurückgegeben. Nunmehr wird die Serie der weiteren in Serie geschalteten Steuereinheiten wieder bezüglich der Richtung invertiert und es wird wieder von der vormals ausgehenden Kommunikationsschnittstelle ein Ergebnis empfangen, beispielsweise wiederum in Form von Steuersignalen, und diese an die zuvor sendenden Steuereinheiten rückgegeben. Somit wird es erfindungsgemäß verhindert, dass einzelne Steuereinheiten zu einem gegebenen Zeitpunkt sowohl in eine Hin- als auch eine Rückrichtung Steuerbefehle beziehungsweise Steuersignale senden. Somit ist es erfindungsgemäß auch nicht notwendig, dass die Steuereinheiten Rechenkapazitäten, also Schaltungen und Speicher, bereithalten müssen, welche beide Kommunikationsrichtungen bedienen müssen. Vielmehr erfolgt stets ein exklusiver Zugriff auf die Steuereinheit im Rahmen einer Kommunikationsrichtung. Da stets diese eine Kommunikationsrichtung vorherrscht, ist es erfindungsgemäß auch nicht notwendig, einen Rückkanal auf der Datenleitung zwischen den Steuereinheiten zu reservieren. Entsprechend können gegenüber herkömmlichen Verfahren auch weniger performante Steuereinheiten eingesetzt werden, welche dennoch die volle Bandbreite des Kommunikationskanals ausnützen.

Gemäß einem Aspekt der vorliegenden Erfindung findet eine erste Signalübermittlung von der ersten Kommunikationsschnittstelle an die zweite Kommunikationsschnittstelle statt und eine zweite Steuersignalübermittlung von der zweiten Kommunikationsschnittstelle an die erste Kommunikationsschnittstelle statt. Dies erfolgt jeweils zeitversetzt. Dies hat den Vorteil, dass die Steuereinheit zu keinem Zeitpunkt einer Steuersignalübermittlung beide Kommunikationsrichtungen bedienen muss. Vielmehr ist es ein Vorteil der vorliegenden Erfindung, dass, obwohl beide Kommunikationsrichtungen bedient werden können, lediglich Ressourcen für eine Kommunikationsrichtung bereitgestellt werden müssen.

Gemäß einem weiteren Aspekt der vorliegenden Erfindung übermittelt die Steuersignalübermittlung eine Mehrzahl von Steuerbefehlen. Dies hat den Vorteil, dass nicht lediglich atomare Signale übertragen werden, sondern dass eben eine Mehrzahl von Steuerungsbefehlen ununterbrochen, d.h. ohne Rückantworten, von einer Steuereinheit an eine nächste Steuereinheit gesendet werden kann. Auch können die Steuerungsbefehle innerhalb der Steuereinheiten von einer eingehenden Kommunikationsschnittstelle an eine ausgehende Kommunikationsschnittstelle übermittelt werden. Somit erfolgt auch innerhalb einer Übermittlung einer Mehrzahl von Steuerungsbefehlen stets ein exklusiver Zugriff auf die Steuereinheit.

Gemäß einem weiteren Aspekt der vorliegenden Erfindung sind die Steuereinheiten zumindest im Wesentlichen gleich ausgestaltet. Dies hat den Vorteil, dass die Steuereinheiten mit wenig technischem Aufwand bereitgestellt werden können, da stets gleichförmige Steuereinheiten in der Serie Anwendung finden können. Somit ist auch nicht zu unterscheiden, ob eine Steuereinheit innerhalb der Serie oder am Ende beziehungsweise am Anfang der Serie verbaut ist. Hierbei ist es auch möglich, dass die Steuereinheiten nicht lediglich im Wesentlichen gleich ausgestaltet sind, sondern gleich ausgestaltet sind.

Gemäß einem weiteren Aspekt der vorliegenden Erfindung erkennen die Steuereinheiten genau ein Signalisierungsformat. Dies hat den Vorteil, dass das Signalisierungsformat, auch als Header bezeichnet, in jede Kommunikationsrichtung, sei es innerhalb der Steuereinheiten oder zwischen den Steuereinheiten, gleich ausgestaltet sein kann. Empfängt also eine Steuereinheit Signalisierungsdaten von einer weiteren Steuereinheit, so ist diese Steuereinheit auch eingerichtet, bei einem Übermitteln der Steuersignale das gleiche Signalisierungsformat zu verwenden. Somit wird innerhalb der gesamten Steuerungsanordnung, also der in Serie geschalteten Steuereinheiten, stets ein einheitliches Signalisierungsformat verwendet. Dies ist insbesondere deshalb vorteilhaft, da nicht für eine Kommunikationsrichtung ein erstes Signalisierungsformat verwendet wird und für eine zweite Kommunikationsrichtung ein zweites Signalisierungsformat verwendet wird. Dies wiederum ermöglicht es, die Steuereinheiten mit wenig technischem Aufwand bereitzustellen, da diese lediglich ein einziges Signalisierungsformat erkennen müssen. Ein Erkennen stellt hierbei auf das Interpretieren des Signalisierungsformats ab.

Gemäß einem weiteren Aspekt der vorliegenden Erfindung wird gemäß dem Signalisierungsformat eine eindeutige Signalfolge zur Taktbestimmung bereitgestellt. Dies hat den Vorteil, dass auch bei einem unterschiedlichen lokalen Takt der einzelnen Steuereinheiten implizit durch die Steuerbefehle eine einheitliche Taktung herbeigeführt werden kann. Dies ist der Fall, da die Steuerbefehle eine vorbestimmte Signalfolge aufweisen können, die der jeweiligen Steuereinheit anzeigt, dass nach der empfangenen Signalfolge Nutzdaten übermittelt werden. Somit können die auf der Kommunikationsleitung empfangenen Datensignale interpretiert werden, ohne dass eine zentrale Einheit vorgesehen wird, welche einen Takt bereitstellt. Vielmehr weisen die Steuereinheiten Merkmale auf, welche Kommunikationssignale auf der Datenleitung empfangen. Wird nunmehr die vordefinierte Signalfolge empfangen, so wird unabhängig von weiteren Maßnahmen festgestellt, dass nunmehr die darauffolgenden Signale als ein Übermittlungsrahmen beziehungsweise als Daten zu interpretieren sind. Somit werden weitere technische Einrichtungen eingespart, welche die Steuerungseinheiten mit einem entsprechenden Takt versorgen. Hierbei ist es besonders vorteilhaft, eine eindeutige Signalfolge zu wählen, da auszuschließen ist, dass Nutzdaten die gleiche Signalfolge aufweisen und somit ungewollt einen neuen Takt einleiten.

Gemäß einem weiteren Aspekt der vorliegenden Erfindung sieht das Signalisierungsformat keine Adressinformationen vor. Dies hat den Vorteil, dass die Adresse bereits implizit durch die in Serie geschalteten Steuereinheiten mittels Ansteuern einer entsprechenden Kommunikationsschnittstelle bereitgestellt werden kann. Somit ist es nicht notwendig, bei einer Datenübertragung den Kommunikationsempfänger zu spezifizieren. Dies ist stets derjenige Kommunikationspartner, der sich mit der sendenden Steuereinheit eine Kommunikationsleitung teilt. Insbesondere ist es erfindungsgemäß besonders vorteilhaft, dass keine Bandbreite für Adressinformationen verloren geht.

Gemäß einem weiteren Aspekt der vorliegenden Erfindung erkennen die Steuereinheiten eine variable Größe von Nutzdaten. Dies hat den Vorteil, dass kein vordefiniertes Format eingehalten werden muss. Vielmehr ist es möglich, die Header-Daten und die Nutzdaten dadurch zu unterscheiden, dass eine eindeutige Signalfolge als Header-Daten empfangen wird und im Nachgang Nutzdaten empfangen werden. Nutzdaten werden solange empfangen, bis die Steuereinheiten wiederum eine weitere eindeutige Signalfolge erhalten, welche wiederum neue Nutzdaten einleitet.

Gemäß einem weiteren Aspekt der vorliegenden Erfindung richten die Steuereinheiten mittels der Steuersignale eine exklusive Kommunikationsrichtung zwischen den beiden Kommunikationsschnittstellen ein. Hierbei ist es auch möglich, dass die Steuereinheiten mittels der Steuersignale eine exklusive Kommunikationsrichtung auf den anliegenden Datenleitungen spezifizieren. So wird bei einer Steuereinheit, welche innerhalb der Serie liegt, nach einem Empfangen von Steuersignalen eben diese Datenleitung nicht mehr abgehört, sondern lediglich falls auf der anderen Kommunikationsschnittstelle Daten eintreffen diese Datenleitung wieder freigeschaltet. Somit stellen die Steuersignale eine exklusive Kommunikationsrichtung sowohl innerhalb der Steuereinheiten als auch zwischen den Steuereinheiten ein.

Gemäß der vorliegenden Erfindung kommunizieren die Kommunikationsleitungen zu jedem Zeitpunkt einer Steuersignalübermittlung paarweise unidirektional miteinander. Dies hat den Vorteil, dass die Steuereinheiten nicht nur innerhalb, zwischen zwei Kommunikationsschnittstellen exklusiv in eine Kommunikationsrichtung geschaltet werden können, sondern dass vielmehr auch eine Kommunikationsrichtung zwischen den Steuereinheiten einstellbar ist.

Gemäß der vorliegenden Erfindung steuern die Steuereinheiten Leuchtdioden an. Dies hat den Vorteil, dass gerade bei in Serie geschalteten Leuchtdioden ein schnelles Ansteuern eben dieser Leuchtdioden möglich ist und somit ein besonders ansprechendes Leuchtverhalten eingestellt wird. Die erfindungsgemäße Steuerungsanordnung ist insbesondere deshalb besonders vorteilhaft, da Leuchtdioden mit wenig technischem Aufwand ansteuerbar sein müssen und entsprechende Diagnosemöglichkeiten gegeben sein müssen. So ist es erfindungsgemäß möglich, Diagnosebefehle an die Steuereinheiten der Leuchtdioden besonders effizient zu übermitteln und ein entsprechendes Diagnoseergebnis besonders effizient wieder zurück zu übermitteln. Somit wird erfindungsgemäß eine Steuerungsanordnung vorgeschlagen, welche eben auch eine Diagnose von Leuchtdioden ermöglicht. Eine Diagnose von Leuchtdioden kann hierbei weitere Sensoren benötigen. Somit können erfindungsgemäß zur Laufzeit betriebene Leuchtdioden auch in Abhängigkeit eines Diagnoseergebnisses effizient angesteuert werden.

Gemäß der vorliegenden Erfindung weisen die Steuersignale einen Farbwert einer Leuchtdiode auf. Dies hat den Vorteil, dass auch sogenannte Multi-Color-Leuchtdioden Verwendung finden können. So ist es beispielsweise möglich, mittels eines RGB-Werts die emittierte Wellenlänge der Leuchtdiode derart einzustellen, dass eine bestimmte Farbe erzeugt wird.

Die vorliegende Aufgabe wird auch gelöst durch ein Steuerungsverfahren für in Serie geschaltete Steuereinheiten, jede der Steuereinheiten aufweisend eine erste Kommunikationsschnittstelle, welche eingerichtet ist zur Kommunikation mit einer weiteren Steuereinheit und eine zweite Kommunikationsschnittstelle, welche geeignet ist zur Kommunikation mit einer weiteren Steuereinheit. Die Steuersignale werden von der ersten Kommunikationsschnittstelle an die zweite Kommunikationsschnittstelle übermittelt exklusiv oder, also entweder oder, von der zweiten Kommunikationsschnittstelle an die erste Kommunikationsschnittstelle übermittelt. Erfindungsgemäß übermittelt die Steuersignalübermittlung eine Mehrzahl von Steuerungsbefehlen und kommunizieren die Steuereinheiten mittels Kommunikationsleitungen zu jedem Zeitpunkt einer Steuersignalübermittlung paarweise unidirektional miteinander, wobei die Steuersignale als Datenrahmen vorliegen, welcher Instruktionen, eine Adresse und Nutzdaten aufweist, wobei die Instruktionen jeweils einen Befehl bezeichnen, den die empfangende Steuereinheit ausführen soll, Nutzdaten einen Farbwert zur Einstellung einer Leuchtdiode bereitstellen und die Adresse eine Nummerierung der Steuereinheiten bereitstellt und ferner jede der Steuereinheiten, welche eine vorbestimmte Instruktion empfängt, die Richtung ändert und die darauf ankommenden Nutzdaten decodiert.

Somit schließt das vorliegende Verfahren aus, dass Steuereinheiten gleichzeitig Steuersignale an zwei Kommunikationspartner übermitteln. Insbesondere können die Steuereinheiten an jeden der beiden Kommunikationsnachbarn Steuerbefehle übermitteln. Dies erfolgt jedoch zeitversetzt.

Gemäß einem Aspekt der vorliegenden Erfindung ist ein Verfahrensschritt zur Sperrung einer Kommunikationsrichtung zwischen beiden Kommunikationsschnittstellen vorgesehen. Dies bezieht sich auch auf eine Sperrung einer Kommunikationsrichtung zwischen zwei Steuereinheiten. Somit wird erfindungsgemäß sichergestellt, dass eben eine exklusive Kommunikationsrichtung implementiert wird und nicht jeweils zu zwei Kommunikationspartnern gesendet wird.

Die vorliegende Aufgabe wird auch gelöst durch ein Computerprogrammprodukt mit Steuerbefehlen, welche eingerichtet sind zur Durchführung eines der vorgeschlagenen Verfahren. Insbesondere ist es vorteilhaft, das Computerprogrammprodukt als ein Protokoll bereitzustellen. Hierdurch werden also die einzelnen Protokollschritte in dem erfindungsgemäßen Verfahren spezifiziert, und das Computerprogrammprodukt speichert diese Steuerbefehle zur Verwendung als ein Protokoll ab. Ferner ist es vorteilhaft, dass die erfindungsgemäße Steuerungsanordnung beziehungsweise die erfindungsgemäßen in Serie geschalteten Steuereinheiten mittels des beschriebenen Verfahrens angesteuert werden können. Insbesondere können diese Steuereinheiten beziehungsweise die Steuerungsanordnung mittels des Verfahrens betrieben werden. In analoger Weise finden die Steuereinheiten beziehungsweise die Steuerungsanordnung Verwendung bei der Ausführung des Verfahrens. Somit ist es insbesondere vorteilhaft, dass alle Merkmale der Steuerungsanordnung, der in Serie geschalteten Steuereinheiten, des Verfahrens sowie des Computerprogrammprodukts derart kombiniert werden können, dass sich der erfindungsgemäße Vorteil einstellt.

Somit wird eine Steuerungsanordnung mitsamt einem entsprechenden Steuerungsverfahren vorgeschlagen, welche es ermöglichen, eine besonders effiziente Hardwareauslastung zu erreichen und hierbei die maximale Bandbreite ausnützen. Da die zugrunde liegende Hardware stets eine Kommunikationsrichtung bedienen muss, ist dies entsprechend einfach auszugestalten, was wiederum zu einer reduzierten Fehleranfälligkeit führt. Ferner können entsprechende Komponenten kleiner ausgestaltet werden, weisen weniger Wärmeentwicklung auf und benötigen weniger Strom als bekannte Komponenten.

Weitere vorteilhafte Ausgestaltungen werden im Folgenden unter Bezugnahme auf die beigefügten Figuren beschrieben. Es zeigen:
- Fig. 1:: ein schematisches Blockschaltbild der erfindungsgemäßen Steuereinheit mitsamt entsprechenden Kommunikationsschnittstellen;
- Fig. 2:: ein schematisches Blockschaltbild einer Steuerungsanordnung mit in Serie geschalteten Steuereinheiten gemäß einem Aspekt der vorliegenden Erfindung;
- Fig. 3:: ein schematisches Blockschaltbild einer Steuerungsanordnung gemäß einem weiteren Aspekt der vorliegenden Erfindung;
- Fig. 4:: eine schematische Darstellung einer Übermittlung von Steuersignalen gemäß einem Signalisierungsformat gemäß einem Aspekt der vorliegenden Erfindung;
- Fig. 5:: eine schematische Darstellung eines Kommunikationsrahmens aufweisend Steuersignale gemäß einem Aspekt der vorliegenden Erfindung;
- Fig. 6:: einen seriellen Kommunikationsrahmen aufweisend Steuersignale gemäß einem weiteren Aspekt der vorliegenden Erfindung;
- Fig. 7:: einen seriellen Kommunikationsrahmen aufweisend Steuersignale gemäß einem weiteren Aspekt der vorliegenden Erfindung;
- Fig. 8:: eine schematische Darstellung einer eindeutigen Signalfolge zur Taktbestimmung gemäß einem Aspekt der vorliegenden Erfindung; und
- Fig. 9: ein Ablaufdiagramm eines Steuerungsverfahrens für in Serie geschaltete Steuereinheiten gemäß einem Aspekt der vorliegenden Erfindung.

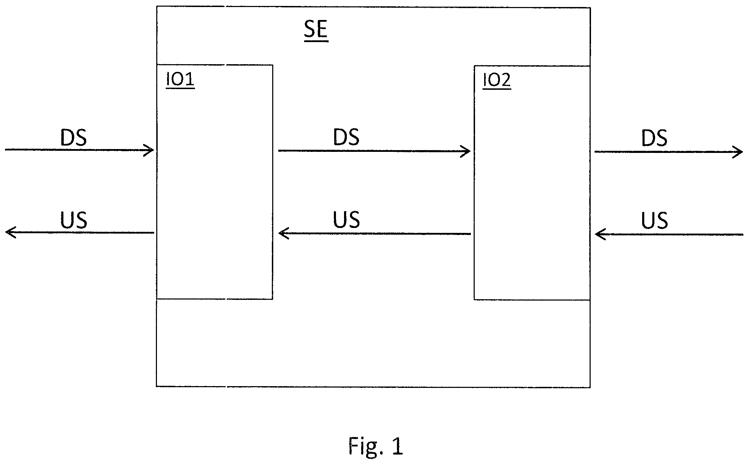

Fig. 1 zeigt eine Steuereinheit SE, welche eingerichtet ist, in eine erste Kommunikationsrichtung DS zu kommunizieren und ferner eingerichtet ist, in eine zweite Kommunikationsrichtung US zu kommunizieren. Hierbei kann es sich bei der ersten Kommunikationsrichtung beispielsweise um eine Downstream-Kommunikationsrichtung DS handeln und bei der zweiten Kommunikationsrichtung um eine Upstream-Kommunikationsrichtung US. Erfindungsgemäß ist es möglich, die Steuereinheiten SE derart in Serie zu schalten, dass sie mittels eines einzigen Datenleitungssegments jeweils paarweise verbunden sind. Somit ist gemäß der vorliegenden Fig. 1 lediglich eine logische Kommunikation mittels der beiden Pfeile DS und US eingezeichnet. Wie in der vorliegenden Fig. 1 ersichtlich ist, kann die Steuereinheit SE bezüglich ihrer Kommunikationsrichtung eingestellt werden. Dies erfolgt erfindungsgemäß derart, dass lediglich die Downstream-Richtung DS oder die Upstream-Richtung US eingestellt wird.

Dies kann beispielsweise mittels der entsprechenden Kommunikationsschnittstellen IO1 oder IO2 durchgeführt werden. So ist es möglich, dass, falls die Steuereinheit SE in der Downstream-Richtung Daten empfängt, es die Kommunikationsschnittstelle IO1 derart einstellt, dass in dieser Downstream-Richtung DS keine weiteren Daten empfangen werden. Lediglich falls über die Upstream-Richtung US wieder Signalisierungsdaten, also Header-Daten, empfangen werden, so wird das entsprechende, vorliegend linke Datenleitungssegment wieder freigeschaltet und es erfolgt ein Rückübertragen in die Upstream-Richtung US. Somit ist es möglich, anhand der empfangenen Steuerbefehle mittels der Kommunikationsschnittstellen IO1 und IO2 eine Kommunikationsrichtung einzustellen.

Bei den Kommunikationsschnittstellen IO1, IO2 handelt es sich um Eingabe- Ausgabeschnittstellen. Diese sind also geeignet potenziell in beide Richtungen zu senden, also sowohl Daten entgegen zunehmen als auch zu senden. Die Kommunikationsschnittstellen können folglich jeweils als bidirektionale Kommunikationsschnittstellen bezeichnet werden. Somit liegt also keine gerichtete Schnittstelleneinheit vor. Alternativ kann die jeweilige Kommunikationsschnittstellen auch derart implementiert werden, dass diese eine Einheit zur Eingabe und eine Einheit zur Ausgabe von Daten vorhält. Folglich liegen zwei unidirektionale Schnittstelleneinheiten vor.

Ferner ist es möglich, in Abhängigkeit des empfangenen Steuersignals, also eines Empfanqens eines Richtungsbefehls, oder auch Header-Daten, innerhalb der Steuereinheit SE die Kommunikationsrichtung einzustellen. Somit werden die beiden Kommunikationsschnittstellen IO1 und IO2 derart eingestellt, dass diese auf dem entsprechenden linken oder rechten Datenleitungssegment entweder nur hören oder nur schreiben. Ein Hören bezieht sich auf ein Warten auf Signale oder auf ein Lesen von Signalen auf der Datenleitung. Somit wird nach einem Empfangen von Steuerbefehlen auf dem linken Datenleitungssegment dieses Datenleitungssegment derart zeitlich gesperrt, dass die erst wieder bei einem Empfangen von Header-Daten aus der Upstream-Richtung US freigeschaltet wird. Wird also von dem linken Datenleitungssegment ein Header beziehungsweise Steuersignale empfangen, so wird auch das rechte Datenleitungssegment DS freigeschaltet und die Steuersignale können übermittelt werden.

Analog hierzu verhält sich das interne Kommunizieren innerhalb der Steuereinheit SE. So kann beispielsweise auch die Kommunikationsrichtung derart eingestellt werden, dass nach einem Empfangen auf der entsprechenden Schnittstelle eine Kommunikationsrichtung innerhalb der Steuereinheit gesperrt beziehungsweise freigegeben wird. Ist beispielsweise die Upstream-Richtung US gesperrt, so kann auch mitsamt den außenliegenden Datenleitungssegmenten die innere Übermittlung der Steuersignale gesperrt werden. Somit wird für eine Anzahl von Steuersignalen stets eine Richtung gesperrt und eine andere entgegengesetzte Richtung freigeschaltet. Hierzu weisen die Steuersignale eine entsprechende Richtungsumschaltungsinformation, auch als Signalisierungsdaten, INIT-Daten, Header-Daten oder INIT-Rahmen bezeichnet, auf. Diese Daten werden anhand eines bereitgestellten Signalisierungsformats spezifiziert und können eine eindeutige Signalfolge zur Taktbestimmung aufweisen.

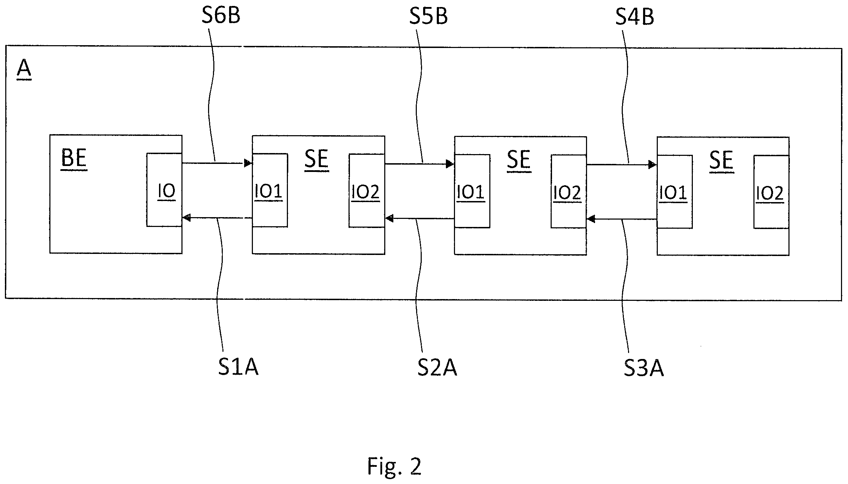

Fig. 2 zeigt die erfindungsgemäße Steuerungsanordnung A aufweisend mehrere in Serie geschaltete Steuereinheiten SE. Hierbei wird mit den gleichen Bezugszeichen der Steuereinheiten SE verdeutlicht, dass diese stets gleich ausgestaltet sind. Auch ist in der vorliegenden Fig. 2 ersichtlich, dass beispielsweise die letzte in Serie geschaltete Steuereinheit, vorliegend die rechte Steuereinheit, eine erste Kommunikationsschnittstelle IO1 aufweist, welche tatsächlich eingerichtet ist zur Kommunikation mit der linken Steuereinheit und ferner eine zweite Kommunikationsschnittstelle IO2 aufweist, welche zwar generell geeignet wäre, mit einer weiteren Steuereinheit zu kommunizieren, diese aber nicht genutzt wird. Somit haben alle Steuereinheiten zwei Kommunikationsnachbarn beziehungsweise zwei Kommunikationspartner, bis auf die letzte Steuereinheit, welche nur den linken Kommunikationspartner aufweist. Dennoch ist es erfindungsgemäß möglich, die letzte in Serie geschaltete Steuereinheit SE analog den anderen in Serie geschalteten Steuereinheiten SE auszubilden. Auch ist es möglich, eine weitere zentrale Steuereinheit oder Befehlseinheit BE vorzusehen, welche als ein Master bezeichnet wird. Alle weiteren Steuereinheiten SE werden dann als Slave bezeichnet.

Um die unidirektionale Kommunikationsrichtung zu verdeutlichen, wurden Datenleitungssegmente, welche die Steuereinheiten paarweise verbinden, als zwei logisch getrennte Pfeile eingezeichnet. So können die Datenleitungssegmente S1A und S6B als eine einzige Datenleitung implementiert sein. Die entsprechenden Pfeile sind gemäß ihrer Kommunikationsrichtung gerichtet. So ist es erfindungsgemäß möglich, jede der einzelnen Steuereinheiten zuerst in eine Kommunikationsrichtung nach rechts zu verwenden und, falls die Steuersignale rechts angekommen sind, die Kommunikationsrichtung derart zu invertieren, dass diese wiederum nach links geschaltet wird. So sind alle Steuereinheiten SE eingerichtet, in jeweils beide Richtungen zu kommunizieren, wobei dies jedoch stets zeitversetzt erfolgt. Somit ist es nicht möglich, dass zu einer gegebenen Zeiteinheit beziehungsweise einem Zeitpunkt die rechte Schnittstelle IO2 einer Steuereinheit mit der linken Schnittstelle IO1 gleichzeitig gemäß den Datenleitungssegmenten S2A und S5B kommuniziert.

Entsprechend gibt auch eine Steuereinheit Steuersignale nicht gleichzeitig von der Kommunikationsschnittstelle lO1 an die Kommunikationsschnittstelle IO2 in beiden Richtungen weiter. Es erfolgt stets ein Übertragen von der Kommunikationsschnittstelle IO1 zu der Kommunikationsschnittstelle IO2 ohne ein gleichzeitiges Rücksenden von Daten von der Kommunikationsschnittstelle IO2 an die Kommunikationsschnittstelle IO1. Somit ist es erfindungsgemäß besonders vorteilhaft, dass sich die zugrunde liegende Kommunikationsrichtung auch innerhalb der Steuereinheit SE einstellen lässt. Dementsprechend sind auch Hardwareressourcen lediglich für eine Kommunikationsrichtung bereitzustellen.

Bezüglich der Kommunikationsschnittstellen IO1, IO2 wird mit Bezug auf Figur 1 und 2 keine Kommunikationsrichtung durch die Wahl der Bezugszeichen IO1, IO2 vorgegeben. Die Kommunikationsrichtung kann entweder von IO1 nach IO2 erfolgen, oder von IO2 nach IO1 erfolgen. Somit kann je nach Kommunikationsrichtung die erste Kommunikationsschnittstelle als IO1 oder die zweite Kommunikationsschnittstelle als IO1 bezeichnet werden. Analog kann die erste Kommunikationsschnittstelle als IO2 oder die zweite Kommunikationsschnittstelle als IO2 bezeichnet werden. Beispielsweise ist eine Kommunikationsrichtung die in den Figuren 1 und 2 von links nach rechts angezeigte Kommunikationsrichtung die der Kommunikationsschnittstellen IO1 nach IO2 und die Kommunikationsrichtung von rechts nach links angezeigte Kommunikationsrichtung die der Kommunikationsschnittstellen IO2 nach IO1. Die Kommunikationsrichtung bezieht sich jeweils auf eine Kommunikationsrichtung innerhalb der Steuereinheiten SE oder eine Kommunikationsrichtung zwischen den paarweise angeordneten Steuereinheiten SE.

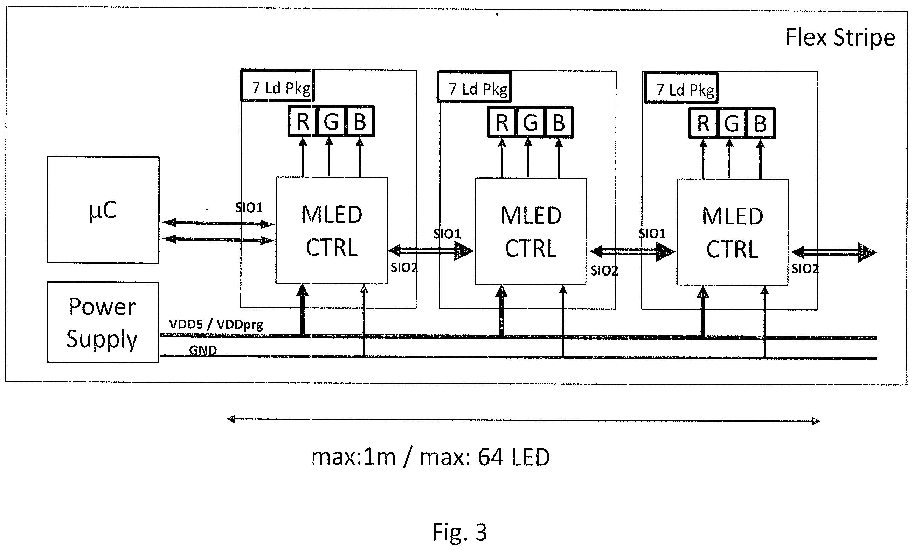

Fig. 3 zeigt einen Aspekt der vorliegenden Erfindung, gemäß dem die Steuereinheiten SE als Steuereinheiten für Leuchtdioden ausgestaltet sind. Somit werden die Steuereinheiten SE vorliegend als MLED CTRL bezeichnet. Hierbei ist es erfindungsgemäß besonders vorteilhaft, dass bestehende Hardware-Komponenten wieder Verwendung finden können und lediglich die MLED CTRL erfindungsgemäß ausgetauscht werden müssen.

So ist vorliegend auf der linken Seite die Befehlseinheit BE als Mikrocontroller ersichtlich, welche vorliegend an drei Steuereinheiten angeschlossen ist. Da die drei Steuereinheiten in Serie geschaltet sind, ist die Befehlseinheit mit einer Steuereinheit direkt verbunden und den weiteren Steuereinheiten indirekt verbunden. Bei den Steuereinheiten kann es sich um sogenannte Multi-LED-Controller handeln. Dies ist in der vorliegenden Fig. 3 als MLED CTRL eingezeichnet. Durch das einheitliche Bezugszeichen soll insbesondere verdeutlicht werden, dass die Steuereinheiten typischerweise gleich ausgestaltet sind. Wie vorliegend ersichtlich ist, handelt es sich bei den Leuchtdioden um RGB- (also rot, grün, blau) Leuchtdioden. Diese sind hierbei eingerichtet, einen bestimmten Farbwert mittels eines Mischverhältnisses der einzelnen Leuchtdiodeneinheiten einzustellen. Ferner ist in der vorliegenden Figur ersichtlich, dass weitere Komponenten je nach Bedarf vorzusehen sind. Beispielsweise kann es notwendig sein, eine Stromzufuhr bereitzustellen. Hierbei ist es jedoch auch möglich, diese Komponenten, beispielsweise die Stromzufuhr, extern bereitzustellen und lediglich anzuschließen.

Die Datenleitung ist vorliegend als Mehrzahl von Datenleitungssegmenten vorhanden, welche als bidirektionale Pfeile SIO1, SIO2 eingezeichnet sind.

Fig. 3 zeigt Steuereinheiten SE gemäß einem Aspekt der vorliegenden Erfindung. Eine Steuereinheit SE kann auch weitere Komponenten aufweisen. Insbesondere kann es sich hierbei um eine Steuereinheit handeln, welche analog der Steuereinrichtung MLED CTRL eingerichtet ist. So sind in Fig. 3 einzelne Leuchtdiodeneinheiten R, G, B vorgesehen, welche schematisch als eine einzelne Leuchtdiode LED vorliegen. Diese emittieren jeweils entweder rotes R, grünes G oder blaues B Licht und stellen ein bestimmtes Mischverhältnis dieser Farben derart ein, dass insgesamt eine beliebige Farbe mittels der LED erzeugt werden kann. Ein Einstellen der Farbwerte kann beispielsweise mittels einer Pulsweitenmodulation PWM erreicht werden. Hierzu sind weitere Komponenten wie zum Beispiel ein On/Off-Modulator (nicht gezeigt) vorzusehen. Dem Fachmann sind hierbei weitere Komponenten bekannt, welche vorzusehen sind, beispielsweise ein LED-Driver (nicht gezeigt). Insbesondere können herkömmliche Komponenten verwendet werden. Deshalb wird hierzu auf eine Beschreibung verzichtet. Besonders vorteilhaft ist hierbei, dass das erfindungsgemäße Verfahren typischerweise mittels herkömmlicher Komponenten veranlasst werden kann, wobei diese lediglich derart angepasst werden, dass sie die einzelnen Verfahrensschritte ausführen.

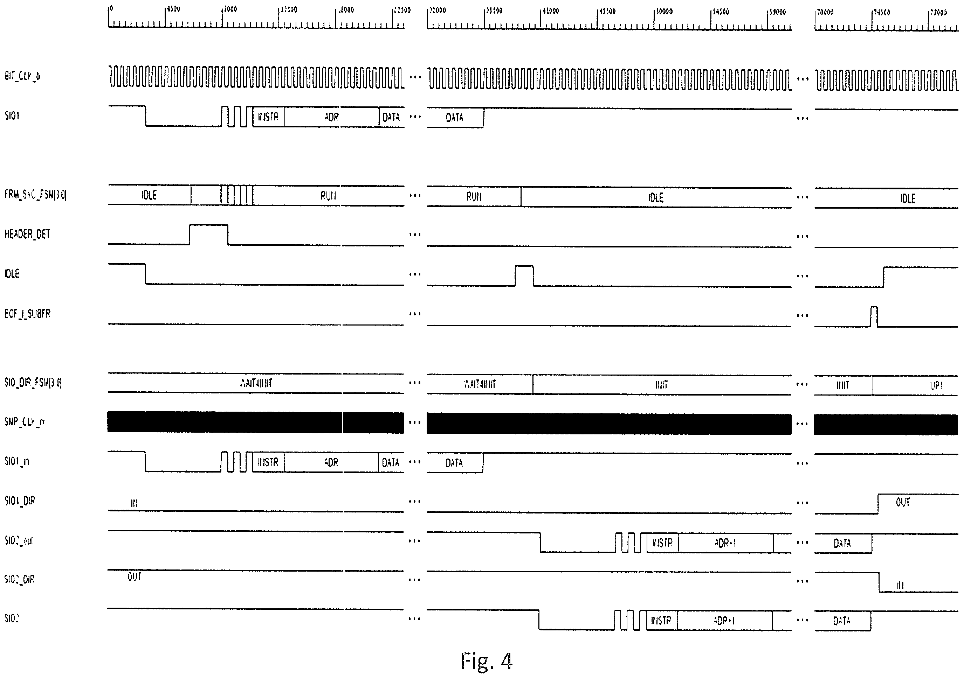

Fig. 4 zeigt eine übermittelte Signalfolge mit Steuersignalen gemäß einem Aspekt der vorliegenden Erfindung. Vorliegend ist eine Signalfolge gemäß einem vorgegebenen Signalisierungsformat gezeigt, welche auf einem Datenleitungssegment empfangen wird. Gemäß diesem Aspekt der vorliegenden Erfindung wird jeder der Steuereinheiten beziehungsweise Smart-LED-Driver eine individuelle Adresse zugewiesen. Dies erfolgt derart, dass die Adressinformation lokal in der Steuereinheit SE abgespeichert wird und anschließend inkrementiert wird. Hierbei wird ein neues Steuersignal erstellt, welches die inkrementierte Adresse aufweist und an den jeweils nächsten Kommunikationspartner übermittelt. Dieses Steuersignal weist ferner eine Header-Information auf, welche es der jeweils nächsten Steuereinheit SE ermöglicht, eine Synchronisation des Takts durchzuführen. Somit erfolgt ein dynamisches Vergeben von Adressen. Ferner ist in der vorliegenden Figur gezeigt, wie eine vorbestimmte Anzahl von Steuersignalen übermittelt wird. Auch ist ersichtlich, dass die jeweiligen Steuereinheiten in einen sogenannten IDLE-Modus übergehen können, in dem sie keine Steuersignale empfangen oder übersenden.

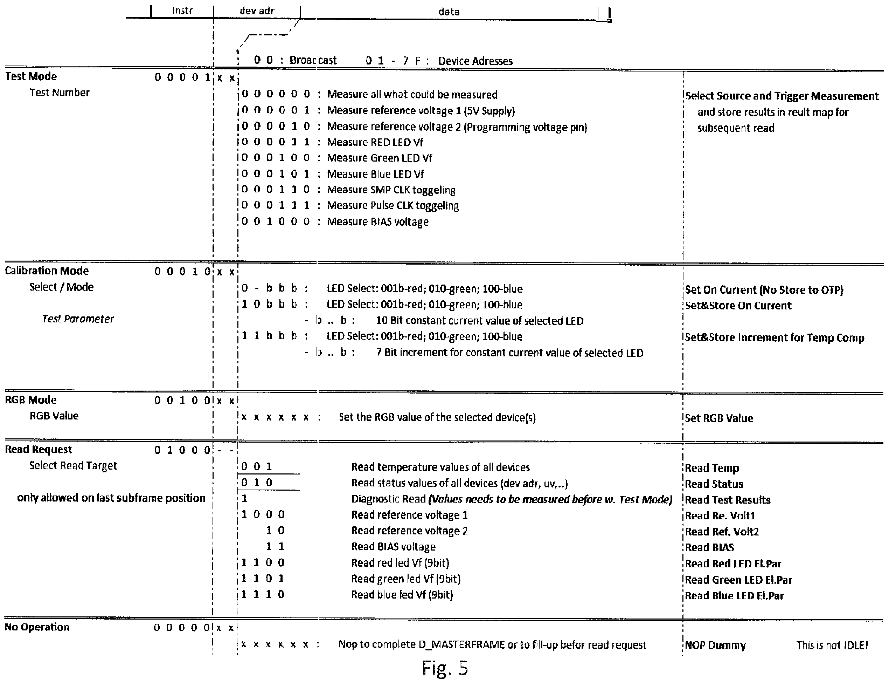

Fig. 5 zeigt den Aufbau von Steuersignalen gemäß einem Aspekt der vorliegenden Erfindung. Dies kann beispielsweise bei der in Fig. 2 gezeigten Anordnung Anwendung finden, wobei die gezeigten Steuersignale von links nach rechts übermittelt werden. Wie der Fig. 5 zu entnehmen ist, handelt es sich bei den Steuersignalen um einen Datenrahmen, welcher Instruktionen, eine Adresse und Nutzdaten aufweist. So wird jeder Instruktion, wie vorliegend auf der linken Seite erkennbar ist, eine Signalfolge zugewiesen. Somit erhält die jeweilige Steuereinheit bei einem Empfangen eines solchen Steuersignals eine Information, welchen Befehl sie nunmehr ausführen soll. Mittels der sogenannten dev_adr erfolgt ein Nummerieren der Steuereinheiten SE, welche in Serie geschaltet sind. Hierbei ist es möglich, wie bereits mit Bezug auf Fig. 4 beschrieben, den jeweiligen Adresswert zu inkrementieren und an die nächste Steuereinheit weiterzusenden. Hier kann beispielsweise wie in der vorliegenden Figur ersichtlich ist festgelegt werden, dass die entsprechende Adresse als Hex-Code codiert wird, was vorliegend mit einem x gekennzeichnet ist oder dass dieses Feld nicht interpretiert werden soll, was vorliegend mit einem - gekennzeichnet ist. Ferner kann das Steuersignal Nutzdaten aufweisen, was vorliegend als Data gekennzeichnet ist. Bei solchen Nutzdaten kann es sich beispielsweise um einen sogenannten RGB-Wert handeln, wie vorliegend unter dem Abschnitt "RGB Mode" gezeigt ist. Somit weisen die Nutzdaten einen Farbwert zur Farbeinstellung einer Leuchtdiode auf. Wie am unteren Ende der vorliegenden Fig. 5 gezeigt ist, kann mittels eines Instruktionscodes, vorliegend "00000", gekennzeichnet werden, dass keine Operationen ausgeführt werden sollen.

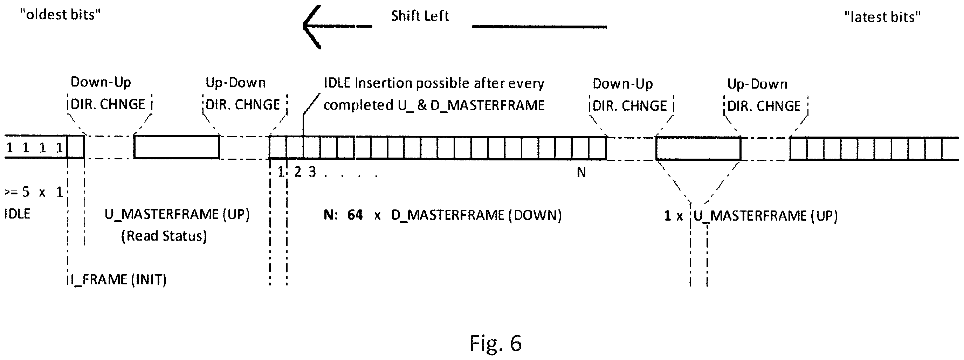

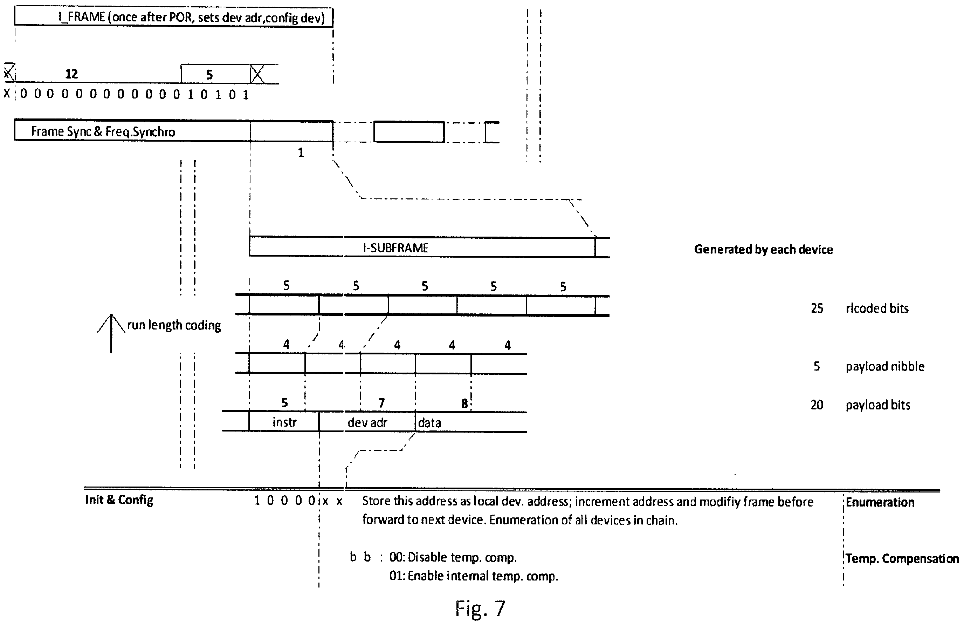

Fig. 6 zeigt ebenfalls einen Aspekt eines Steuersignals, wie es erfindungsgemäß Anwendung findet. Wie in der vorliegenden Fig. 6 ersichtlich ist, weist das Steuersignal mehrere Steuerbefehle auf. Auf der linken Seite ist ersichtlich, dass eine Codierung von fünfmal einem gesetzten Bit, also "11111", einen sogenannten IDLE-Modus beschreibt. Die entsprechende Signalfolge weist hierzu mindestens fünfmal eine 1 auf, was auch heißt, dass mehrere gesetzte Flags >5 verwendet werden können. Besonders vorteilhaft ist das in der vorliegenden Figur fünfte gesetzte Bit. Dies wird nach den vier gezeigten IDLE-Bits, also den ersten vier Feldern, als fünftes Feld angefügt. Dieses fünfte Feld weist weitere Signalisierungsdaten auf, wie sie beispielsweise in der Fig. 7 ersichtlich sind.

Fig. 7 zeigt oben eine Vergrößerung des mit Bezug auf Fig. 6 beschriebenen Felds. Wie in Fig. 7 ersichtlich ist, ist eine Signalfolge mit fünf Bits vorgesehen, welche einem Signalisierungsformat gemäß der vorliegenden Erfindung entsprechen. So ist in der Fig. 7 oben unter der entsprechenden Anzahl "5" der Bits die Signalfolge "10101" gezeigt. Diese eindeutige Signalfolge zeigt an, dass darauffolgend Nutzdaten übertragen werden. Somit kann erfindungsgemäß jede der Steuereinheiten, welche einen solchen Code beziehungsweise eine solche Signalfolge empfängt, die Richtung ändern und die darauf ankommenden Nutzdaten decodieren. Bei der Signalfolge "10101" handelt es sich um eine eindeutige Signalfolge, welche beispielsweise zur Taktbestimmung herangezogen werden kann.

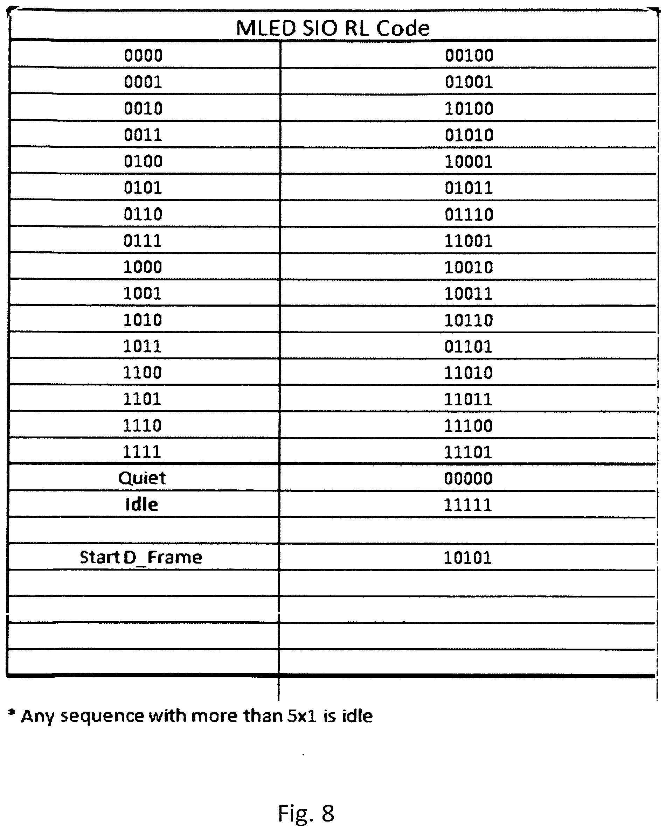

Ein Bereitstellen einer gewissen Signalfolge, welche eindeutig ist, ist in der Fig. 8 gezeigt. Hierzu zeigt Fig. 8 eine Tabelle, welche auf der linken Seite eine semantische beziehungsweise logische Zahlenfolgen anzeigt und auf der rechten Seite den zugehörigen Bitcode. Wie am unteren Ende der Fig. 8 eingezeichnet, handelt es sich bei der Signalfolge "10101" um den technisch übertragenen Wert, der für das Beginnen von Nutzdaten steht. Somit kann jede Steuereinheit, welche auf einem Datenleitungssegment diesen Code identifiziert, davon ausgehen, dass im Anschluss Nutzdaten übermittelt werden. Wie ebenfalls aus der vorliegenden Tabelle ersichtlich ist, handelt es sich gemäß einem Aspekt der vorliegenden Erfindung bei dem Code "11111" um einen Leerlauf-Code, welcher die Steuereinheiten inaktiv setzt. Lediglich falls wiederum der Code "10101" empfangen wird, wird die entsprechende Kommunikationsrichtung freigeschaltet und Nutzdaten werden empfangen. Wie auf der rechten Seite der vorliegenden Tabelle ersichtlich ist, sind auch Aneinanderreihungen der Signalfolgen nicht geeignet, fünfmal die Abfolge "0" oder fünfmal die Abfolge "1" zu erzeugen. Somit ist es erfindungsgemäß möglich, eine eindeutige Signalfolge bereitzustellen, welche entsprechende Semantik codiert. Die Steuereinheiten können gemäß einem Aspekt der vorliegenden Erfindung über eine solche Tabelle verfügen und können daher den jeweiligen Befehlscode interpretieren.

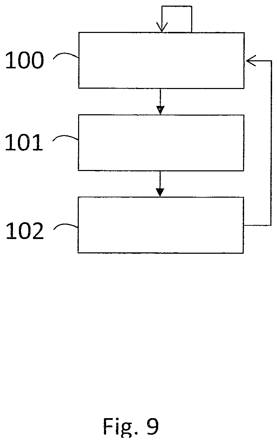

Fig. 9 zeigt das erfindungsgemäße Steuerungsverfahren für in Serie geschaltete Steuereinheiten. So erfolgt in einem ersten Verfahrensschritt 100 ein Empfangen von Steuersignalen auf einer der beiden Kommunikationsschnittstellen. Hierbei wird iterativ überprüft, ob es sich um Steuersignale handelt, welche eine Kommunikationsrichtungsumkehr bewirken. Ist dies nicht der Fall, so werden stets die Informationen weitergesendet und nicht bearbeitet. Entsprechende Steuersignale wurden bezüglich der Fig. 4 bis 8 beschrieben. Wird nunmehr in dem Verfahrensschritt 100 eine entsprechende Header-Information empfangen, so können in einem darauffolgenden Verfahrensschritt 101 ein Sperren der derzeitigen Kommunikationsrichtung und ein Entsperren der zuvor gesperrten Kommunikationsrichtung erfolgen. Somit erfolgt in Verfahrensschritt 101 eine Richtungsumkehr, wie sie bereits beschrieben wurde. Daraufhin kann in einem weiteren Verfahrensschritt 102 ein Weiterreichen der empfangenen Steuersignale, beispielsweise in angepasster Form, erfolgen. Hierbei ist es insbesondere vorteilhaft, dass das Empfangen 100 und das Ausgeben von Daten 102 stets in die gleiche Kommunikationsrichtung erfolgt. Die einzige Ausnahme hierzu stellt die letzte in Serie geschaltete Steuereinheit dar, welche Daten empfängt 100 und, falls eine entsprechende Information vorliegt, die Richtung umkehrt 101, typischerweise jedoch keine Daten gemäß dem Verfahrensschritt 102 sofort sendet, sondern erst die Richtung invertiert und dann sendet.

Insbesondere ist es vorteilhaft, die Verfahrensschritte 100, 101 und 102 derart iterativ zu durchlaufen, dass in den Steuereinheiten jeweils ein Empfangen von Daten erfolgt, anschließend überprüft wird, ob den Steuerbefehlen ein Richtungswechsel zu entnehmen ist und gegebenenfalls die Richtung zu invertieren und Daten auszugeben oder, falls kein Richtungswechsel erkennbar ist, weiterhin die Kommunikationsrichtung beizubehalten. Mit Bezug auf die vorliegende Fig. 2 kann somit in dem Verfahrensschritt 101 entschieden werden, ob ein Richtungswechsel von links nach rechts zu rechts nach links stattfinden soll oder ob die Kommunikationsrichtung nach links beibehalten werden soll oder ob die Kommunikationsrichtung nach rechts beibehalten werden soll. Somit wird der Verfahrensschritt 100 derart iterativ durchlaufen, bis eine Umkehrinformation in der jeweiligen Steuereinheit vorliegt.

Somit wird erfindungsgemäß ein besonders effizientes Steuerungsverfahren beziehungsweise eine Steuerungsanordnung vorgeschlagen, welche ein besonders effizientes Ansteuern beispielsweise von Leuchtdioden ermöglichen. Insbesondere ist hierbei vorteilhaft, dass ein entsprechendes Protokoll als ein Computerprogrammprodukt bereitgestellt werden kann. Ferner ist die Erfindung gerichtet auf die einzelnen Steuereinheiten, wie sie beispielsweise mit Bezug auf Fig. 1 gezeigt wurden.

## Patentansprüche

1. Steuerungsanordnung (A) mit in Serie geschalteten Steuereinheiten (SE), welche Leuchtdioden ansteuern, jede der Steuereinheiten (SE) aufweisend eine erste Kommunikationsschnittstelle (IO1, IO2), welche eingerichtet ist zur Kommunikation mit einer weiteren Steuereinheit (SE) und eine zweite Kommunikationsschnittstelle (IO1, IO2), welche geeignet ist zur Kommunikation mit einer weiteren Steuereinheit (SE), wobei die Steuereinheiten (SE) derart eingerichtet sind, dass Steuersignale von der ersten Kommunikationsschnittstelle (IO1, IO2) an die zweite Kommunikationsschnittstelle (IO1, IO2) exklusiv oder von der zweiten Kommunikationsschnittstelle (IO1, IO2) an die erste Kommunikationsschnittstelle (IO1, IO2) übermittelt werden, **dadurch gekennzeichnet, dass** die Steuersignalübermittlung eine Mehrzahl von Steuerungsbefehlen übermittelt und die Steuereinheiten (SE) mittels Kommunikationsleitungen zu jedem Zeitpunkt einer Steuersignalübermittlung paarweise unidirektional miteinander kommunizieren,
wobei die Steuersignale als Datenrahmen vorliegen, welcher Instruktionen, eine Adresse und Nutzdaten aufweist, wobei die Instruktionen jeweils einen Befehl bezeichnen, den die empfangende Steuereinheit (SE) ausführen soll, Nutzdaten einen Farbwert zur Einstellung einer Leuchtdiode bereitstellen und die Adresse eine Nummerierung der Steuereinheiten (SE) bereitstellt und ferner jede der Steuereinheiten (SE), welche eine vorbestimmte Instruktion empfängt, die Richtung ändert und die darauf ankommenden Nutzdaten decodiert.

2. Steuerungsanordnung (A) gemäß Anspruch 1, **dadurch gekennzeichnet, dass** eine erste Steuersignalübermittlung von der ersten Kommunikationsschnittstelle (IO1, IO2) an die zweite Kommunikationsschnittstelle (IO1, IO2) und eine zweite Steuersignalübermittlung von der zweiten Kommunikationsschnittstelle (IO1, IO2) an die erste Kommunikationsschnittstelle (IO1, IO2) jeweils zeitversetzt stattfinden.

3. Steuerungsanordnung (A) gemäß Anspruch 1 oder 2, **dadurch gekennzeichnet, dass** die Steuereinheiten (SE) zumindest im Wesentlichen gleich ausgestaltet sind.

4. Steuerungsanordnung (A) gemäß einem der vorhergehenden Ansprüche, **dadurch gekennzeichnet, dass** die Steuereinheiten (SE) eingerichtet sind genau ein Signalisierungsformat zu erkennen.

5. Steuerungsanordnung (A) gemäß einem der vorhergehenden Ansprüche, **dadurch gekennzeichnet, dass** gemäß einem Signalisierungsformat eine eindeutige Signalfolge zur Taktbestimmung bereitsgestellt wird.

6. Steuerungsanordnung (A) gemäß einem der vorhergehenden Ansprüche, **dadurch gekennzeichnet, dass** ein Signalisierungsformat keine Adressinformation vorsieht.

7. Steuerungsanordnung (A) gemäß einem der vorhergehenden Ansprüche, **dadurch gekennzeichnet, dass** die Steuereinheiten (SE) eingerichtet sind eine variable Größe der Nutzdaten zu erkennen.

8. Steuerungsanordnung (A) gemäß einem der vorhergehenden Ansprüche, **dadurch gekennzeichnet, dass** die Steuereinheiten (SE) eingerichtet sind mittels der Steuersignale eine exklusive Kommunikationsrichtung zwischen den beiden Kommunikationsschnittstellen (IO1, IO2) einzurichten.

9. Steuerungsverfahren für in Serie geschaltete Steuereinheiten (SE), jede der Steuereinheiten (SE) aufweisend eine erste Kommunikationsschnittstelle (IO1, IO2), welche eingerichtet ist zur Kommunikation mit einer weiteren Steuereinheit (SE) und eine zweite Kommunikationsschnittstelle (IO1, IO2), welche geeignet ist zur Kommunikation mit einer weiteren Steuereinheit (SE), wobei Steuersignale von der ersten Kommunikationsschnittstelle (IO1, IO2) an die zweite Kommunikationsschnittstelle (IO1, IO2) exklusiv oder von der zweiten Kommunikationsschnittstelle (IO1, IO2) an die erste Kommunikationsschnittstelle (IO1, IO2) übermittelt werden, **dadurch gekennzeichnet, dass** die Steuersignalübermittlung eine Mehrzahl von Steuerungsbefehlen übermittelt und die Steuereinheiten (SE) mittels Kommunikationsleitungen zu jedem Zeitpunkt einer Steuersignalübermittlung paarweise unidirektional miteinander kommunizieren, wobei die Steuersignale als Datenrahmen vorliegen, welcher Instruktionen, eine Adresse und Nutzdaten aufweist, wobei die Instruktionen jeweils einen Befehl bezeichnen, den die empfangende Steuereinheit (SE) ausführen soll, Nutzdaten einen Farbwert zur Einstellung einer Leuchtdiode bereitstellen und die Adresse eine Nummerierung der Steuereinheiten (SE) bereitstellt und ferner jede der Steuereinheiten (SE), welche eine vorbestimmte Instruktion empfängt, die Richtung ändert und die darauf ankommenden Nutzdaten decodiert.

10. Steuerungsverfahren gemäß Anspruch 9, **dadurch gekennzeichnet, dass** ein Verfahrensschritt zur Sperrung einer Kommunikationsrichtung zwischen beiden Kommunikationsschnittstellen (IO1, IO2) vorgesehen ist.

11. Computerprogrammprodukt mit Steuerbefehlen eingerichtet zur Durchführung eines Verfahrens gemäß Anspruch 9 oder 10, wenn die Steuerbefehle des Computerprogrammprodukts in einer Steuerungsanordnung zum Ablaufen gebracht werden.

## Claims

1. A control assembly (A) comprising serially connected control units (SE), which control light emitting diodes, wherein each of the control units (SE) comprises a first communication interface (IO1, IO2) configured for communication with a further control unit (SE), and a second communication interface (IO1, IO2) suitable for communication with a further control unit (SE), wherein the control units (SE) are configured such that control signals are transmitted from the first communication interface (IO1, IO2) to the second communication interface (IO1, IO2) exclusively or from the second communication interface (IO1, IO2) to the first communication interface (IO1, IO2), **characterized in that** the control signal transmission transmits a plurality of control commands and the control units (SE) communicate at any time of a control signal transmission unidirectional in pairs with each other by means of communication lines, wherein the control signals are a data frame which contains instructions, an address and payload, wherein each instruction indicates a command to be executed by the receiving control unit (SE), the payload comprises a color value for color adjustment of the light-emitting diode and the address provides a numbering of the control units (SE) and each of the control units (SE) receiving such an instruction switches the direction and decodes the subsequently arriving payload.

2. The control assembly (A) according to claim 1, **characterized in that** a first signal transmission from the first communication interface (IO1, IO2) to the second communication interface (IO1, IO2) takes place, and a second signal transmission from the second communication interface (IO1, IO2) to the first communication interface takes place (IO1, IO2), which takes place in a time-delayed manner, respectively.

3. The control assembly (A) according to one of claims 1 or 2, **characterized in that** the control units (SE) are at least substantially designed identical.

4. The control assembly (A) according to one of the preceding claims, **characterized in that** the control units (SE) are configured to identify exactly one signaling format.

5. The control assembly (A) according to one of the preceding claims, **characterized in that**, in accordance with a signaling format, a distinct signal sequence for pulse determination is provided.

6. The control assembly (A) according to one of the preceding claims, **characterized in that** a signaling format does not provide further address information.

7. The control assembly (A) according to one of the preceding claims, **characterized in that** the control units (SE) identify a variable size of payload.

8. The control assembly (A) according to one of the preceding claims, **characterized in that** the control units (SE) are configured to establish an exclusive communication direction between the two communication interfaces (IO1, IO2) based on the control signals.

9. A control method for control units (SE) connected in series, wherein each of the control units (SE) comprises a first communication interface (IO1, IO2) configured for communication with a further control unit (SE), and a second communication interface (IO1, IO2) suitable for communication with a further control unit (SE), wherein the control signals are transmitted from the first communication interface (IO1, IO2) to the second communication interface (IO1, IO2) exclusively or, i.e. either or, transmitted from the second communication interface (IO1, IO2) to the first communication interface (IO1, IO2), **characterized in that** the control signal transmission transmits a plurality of control commands and the control units (SE) communicate at any time of a control signal transmission unidirectional in pairs with each other by means of communication lines, wherein the control signals are a data frame which contains instructions, an address and payload, wherein each instruction indicates a command to be executed by the receiving control unit (SE), the payload comprises a color value for color adjustment of the light-emitting diode and the address provides a numbering of the control units (SE) and each of the control units (SE) receiving such an instruction switches the direction and decodes the subsequently arriving payload.

10. The control method according to claim 9, wherein a method step for blocking a communication direction between both communication interfaces (IO1, IO2) is provided.

11. A computer program product comprising control commands configured for execution of a method according to claim 9 or 10 when being executed on a control assembly.

## Revendications

1. Agencement de commande (A) doté d'unités de commande (SE) commutées en série, lesquelles commandent des diodes électroluminescentes, chacune des unités de commande (SE) comportant une première interface de communication (IO1, IO2), laquelle est disposée pour communiquer avec une autre unité de commande (SE) et une deuxième interface de communication (IO1, IO2), laquelle est adaptée pour communiquer avec une autre unité de commande (SE), dans lequel les unités de commande (SE) sont disposées de telle sorte que des signaux de commande sont transmis ou exclusivement de la première interface de communication (IO1, IO2) à la deuxième interface de communication (IO1, IO2) ou aussi transmis de la deuxième interface de communication (IO1, IO2) à la première interface de communication (IO1, IO2), **caractérisé en ce que** la transmission du signal de commande transmet une pluralité d'ordres de commande et les unités de commande (SE) communiquent l'une avec l'autre par paires, de manière unidirectionnelle, à chaque instant d'une transmission de signal de commande au moyen de lignes de communication,
dans lequel les signaux de commande existent comme trame de données, laquelle comporte des instructions, une adresse et des données utiles, dans lequel les instructions désignent respectivement un ordre que l'unité de commande (SE) réceptrice doit exécuter, des données utiles fournissent une valeur chromatique pour le réglage d'une diode électroluminescente et l'adresse fournit une numération des unités de commande (SE) et en outre chacune des unités de commande (SE) qui reçoit une instruction prédéterminée change la direction et décode les données utiles qui lui parviennent.

2. Agencement de commande (A) selon la revendication 1, **caractérisé en ce qu'**une première transmission de signal de commande de la première interface de communication (IO1, IO2) à la deuxième interface de communication (IO1, IO2) et une deuxième transmission de signal de commande de la deuxième interface de communication (IO1, IO2) à la première interface de communication (IO1, IO2) prennent place respectivement avec un décalage temporel.

3. Agencement de commande (A) selon la revendication 1 ou 2, **caractérisé en ce que** les unités de commande (SE) sont au moins essentiellement réalisées à l'identique.

4. Agencement de commande (A) selon l'une des revendications précédentes, **caractérisé en ce que** les unités de commande (SE) sont disposées pour reconnaître exactement un format de signalisation.

5. Agencement de commande (A) selon l'une des revendications précédentes, **caractérisé en ce que**, selon un format de signalisation, une suite de signaux univoque est fournie pour la détermination d'horloge.

6. Agencement de commande (A) selon l'une des revendications précédentes, **caractérisé en ce qu'**un format de signalisation ne prévoit pas d'information d'adresse.

7. Agencement de commande (A) selon l'une des revendications précédentes, **caractérisé en ce que** les unités de commande (SE) sont disposées pour reconnaître une grandeur variable des données utiles.

8. Agencement de commande (A) selon l'une des revendications précédentes, **caractérisé en ce que** les unités de commande (SE) sont disposées au moyen des signaux de commande pour créer une direction de communication exclusive entre les deux interfaces de communication (IO1, IO2).

9. Procédé de commande pour des unités de commande (SE) commutées en série, chacune des unités de commande (SE) une première interface de communication (IO1, IO2), laquelle est disposée pour la communication avec une autre unité de commande (SE) et une deuxième interface de communication (IO1, IO2), laquelle est adaptée pour communiquer avec une autre unité de commande (SE),dans lequel des signaux de commande sont transmis ou exclusivement de la première interface de communication (IO1, IO2) à la deuxième interface de communication (IO1, IO2) ou aussi transmis de la deuxième interface de communication (IO1, IO2) à la première interface de communication (IO1, IO2), **caractérisé en ce que** la transmission du signal de commande transmet une pluralité d'ordres de commande et les unités de commande (SE) communiquent l'une avec l'autre par paires, de manière unidirectionnelle, à chaque instant d'une transmission de signal de commande au moyen de lignes de communication, dans lequel les signaux de commande existent comme trame de données, laquelle comporte des instructions, une adresse et des données utiles, dans lequel les instructions désignent respectivement un ordre que l'unité de commande (SE) réceptrice doit exécuter, des données utiles fournissent une valeur chromatique pour le réglage d'une diode électroluminescente et l'adresse fournit une numération des unités de commande (SE) et en outre chacune des unités de commande (SE) qui reçoit une instruction prédéterminée change la direction et décode les données utiles qui lui parviennent.

10. Procédé de commande d'après la revendication 9, **caractérisé en ce qu'**une étape de procédé pour le verrouillage d'une direction de communication entre deux interfaces de communication (IO1, IO2) est prévue.

11. Produit-programme informatique doté d'ordres de commande disposés pour la mise en oeuvre d'un procédé d'après la revendication 9 ou 10, lorsque les ordres de commande du produit-programme informatique sont apportés dans un agencement de commande pour déroulement.
